# EUROPEAN PATENT APPLICATION

(11) **EP 2 725 818 A1**
(43) Date of publication of application: **30.04.2014**
(21) Application number: 12189562.7
(22) Date of filing: 23.10.2012
(51) Int. Cl.: H04R 1/10, G01C 21/36

(54) **A hearing device with a distance measurement unit**

(71) Applicant: GN Store Nord A/S, 2750 Ballerup (DK)
(72) Inventor: Jensen, Jakob, 2650 Hvidovre (DK); Mossner, Peter, 2770 Kastrup (DK); Sørensen, Peter Schou, 2500 Valby (DK)
(74) Representative: Zacco Denmark A/S

(57) **Abstract**

A new hearing device is proviede configured to be head worn for emission of sound towards at least one of the ears of a user and accommodating an inertial measurement unit configured for determining head yaw, when the user wears the hearing device in its intended operational position on the user's head, and a distance measurement unit configured to measure distance from the user to an object in the field of view of the user.

## Description

### FIELD OF TECHNOLOGY

A new hearing device is provided, comprising an inertial measurement unit configured for determining head yaw, when the user wears the hearing device in its intended operational position on the user's head, and a distance measurement unit configured to measure distance from the user to an object in the field of view of the user.

The new hearing device may include or form part of a navigation system, comprising a GPS-unit and configured to emit spoken information on a Point-Of-Interest (POI) in the field of view of the user of the navigation system.

### BACKGROUND

Typically, present GPS-units guide a user towards a desired destination using visual and audible guiding indications. For example, present GPS-units typically displays a map on a display screen that includes the current position of the user, typically at the centre of the displayed map, and a suitable route drawn on the displayed map towards a desired destination accompanied by spoken instructions, such as "turn left at the next junction".

Conventional GPS-units typically include a database with a variety of particular locations denoted Points-of-interest (POIs). POIs are typically shown on the map with an icon indication the particular type of the POI in question at the geographical position of the POI.

Typically, POI categories include: Restaurants, Hotels, Shopping Centres, Industrial Estates, Police Stations, Post Offices, Banks, ATMs, Hospitals, Pharmacies, Schools, Churches, Golf Courses, Low Bridges, Historic Sites, Camping & Caravan Sites, etc.

Typically, the POI database includes information on POIs, such as the type of POI, the name of the POI, longitude and latitude of the POI, the address of the POI, possible phone numbers, etc.

Some conventional GPS-units are configured for containing audio tours guiding the user along a specific route with MP3 audio files associated with respective POIs along the route and played automatically when the GPS-unit is within a certain distance from the POI in question. The audio tours with MP3 audio files are downloaded into the GPS-unit beforehand.

### SUMMARY

A new hearing device is provided that is configured to be head worn for emission of sound towards at least one of the ears of a user and accommodates an inertial measurement unit configured for determining head yaw, when the user wears the hearing device in its intended operational position on the user's head, and a distance measurement unit configured to measure distance from the user to an object in the field of view of the user.

The new hearing device may form part of a navigation system, or the new hearing device may comprise a navigation system.

Thus a new navigation system is provided, comprising the above-mentioned hearing device, a GPS unit for determining the geographical position of the system, a sound generator connected for outputting audio signals, and a processor.

The processor of the navigation system is configured for, based on the determined head yaw,
selecting a POI in the field of view of the user,
receiving a distance measurement from the distance measurement unit,
determining the distance from the user to the selected POI based on geographical positions of the user and the selected POI, and
controlling the sound generator to output audio signals with spoken information on the selected POI, when the absolute value of the difference between the received distance measurement and the determined geographical distance from the user to the selected POI is less than a predetermined obstruction threshold.

In the event that the measured distance from the user to an object in the field of view, e.g. a nearest object along the line-of-sight of the user, is shorter than the distance, as e.g. obtained from GPS map data, to the selected POI in the field of view of the user, the navigation system does not present spoken information on the specific POI to the user, since the user is unable to see the POI due to the obstructing object in front of the POI.

The object may be one or more trees, a truck, a market, a building that does not constitute a POI, etc.

In a hearing device with a camera, further image information may be obtained in order to determine to what degree the specific object obstructs the view of the POI in question.

A method is also provided, comprising the steps of
determining the geographical position of a user with a GPS unit,
determining head yaw of the user with a head worn inertial measurement unit,
selecting a POI in the field of view of the user,
determining a distance from the user to the selected POI based on geographical positions of the user and the selected POI,
determining a distance from the user to an object in the field of view of the user, and
outputting sound with spoken information on the selected POI, when the absolute value of the difference between the determined distance from the user to the object in the field of view of the user and the determined geographical distance from the user to the selected POI, is less than a predetermined obstruction threshold.

For example, spoken information on the specific POI may not be presented to the user, when the absolute value of the difference between the received distance measurement and the determined geographical distance from the user to the selected POI is larger than a predetermined obstruction threshold, and possibly spoken information that the POI is hidden behind another object in the field of view of the user is presented instead e.g. a spoken message, such as "view of POI obstructed".

Alternatively, spoken information that the POI is hidden behind another object in the field of view may be presented, e.g. a spoken message, such as "view of POI obstructed", in addition to the spoken information on the POI in question, when the absolute value of the difference between the received distance measurement and the determined geographical distance from the user to the selected POI is larger than a predetermined obstruction threshold.

The inertial measurement system may also be configured for determining head pitch, when the user wears the hearing device in its intended operational position on the user's head, and the processor may be configured for, in the event that a first POI is positioned closest to the centre of the field of view of the user and obstructs the view of a second POI with a height larger than the height of the first POI, select the second POI, when the determined head pitch is larger than a predetermined pitch threshold.

The processor is preferably configured for taking head pitch into account when determining the absolute value of the difference between the received distance measurement and the determined distance from the user to the selected POI.

The pitch threshold may be user selectable.

The predetermined obstruction threshold is dependent on the type of distance measurement unit used and the accuracy of the GPS unit. One exemplary appropriate value is 5 m.

Various types of distance measurement units are well-known in the art. The distance measurement unit may for example be an optical triangulation unit, a light stripe unit, a photogrammetric unit, a laser time-of-flight unit, an ultrasonic time-of-flight unit, a laser tracker unit, optical range finders, etc.

Optical range finders are well-known from cameras, utilizing phase detection or contrast detection in a single camera.

The hearing device and/or the navigation system may have a user interface, and the distance to an object in the field of view of the user may be performed in response to a user input through the user interface.

The distance from the user to an object in the field of view of the user may be performed continuously, and continuous measurements may be started and stopped by the user.

Geographical position, head yaw and possibly head pitch may be determined simultaneously with continuous or discrete determinations of the distance to an object in the field of view of the user, and connected values of distance from the user to an object in the field of view of the user, head yaw, head pitch, and geographical position may be recorded.

A map may be formed with the objects based on the recorded connected values.

The connected data may also be uploaded to a server and used to generate 3D map. Having a continually updated line of sight map has the advantage that the user does not have to wait for the distance measurement to be made.

The processor may be configured for selecting the POI positioned closest to the centre of the field of view of the user, when more than one POI are visible in the field of view of the user.

The processor may be configured for, in the event that a first POI is positioned closest to the centre of the field of view of the user and obstructs the view of a second POI with a height larger than the height of the first POI, select the second POI, when the determined head pitch is larger than a predetermined pitch threshold.

The pitch threshold may be user selectable.

Preferably, POI with a distance to the user that is larger than a predetermined first distance threshold cannot be selected. Provision of the first distance threshold prevents POIs outside the range of vision of the user from being selected.

Preferably, the first distance threshold is dependent on the geographical position of the user. For example, in a street in a city, the first distance threshold may be small corresponding to the width of the street, in a city square, the first distance threshold may be larger corresponding to the largest width of the square, and in an open range, the first distance threshold may correspond to the range of vision.

Preferably, POIs higher than a predetermined height threshold can be selected even with a distance to the user that is larger than the first distance threshold. In this way, the larger range of vision of tall POIs is taken into account, and the user can control the navigation system to select a high POI, e.g. a tower, a high rise building, etc, located behind another POI, by looking up at the higher POI. Preferably, POIs higher than a predetermined height threshold and with a distance to the user that is larger than a predetermined second distance threshold that is larger than the first distance threshold cannot be selected so that tall POIs located outside the larger range of vision of the user can not be selected.

If no POI is present within the current field of view of the user and within the respective first or second distance thresholds, the processor may be configured for controlling the sound generator to output a signal indicating absence of POI to the user, e.g. a spoken message, such as "no POI within field of view".

The navigation system may provide the option that the user can select more than one POI within the user's field of view to be presented to the user by the system, and the user may specify the maximum number of POIs to be presented. If this option is selected and in the event that more than one POI are located within the user's field of view, the processor is configured for controlling the sound generator to output audio signals with spoken information on the selected POIs in sequence.

The processor may further be configured for controlling the sound generator to output audio signals with spoken information on the relative positions of the selected POIs, such as referring to the central POI, the POI immediately to the left of the central POI, etc.

The navigation system may comprise one or more pairs of filters with Head-Related Transfer Functions (HRTFs), each of which may be selectively configured for filtering the output from the sound generator into a binaural acoustic sound signal output by the loudspeakers of the hearing device for emission towards the ears of the user, whereby the user perceives the sound as coming from a sound source positioned in a direction corresponding to the respective HRTF.

The HRTF of the pair of filters simulates the transmission of sound from a sound source located in a specific position to each of the two eardrums of the user.

Preferably, the one or more pairs of filters comprise digital filters with registers holding the filter coefficients. Thus, the filter coefficients of a selected HRTF are loaded into the appropriate pair of registers and the respective pair of filters operates to filter with transfer functions of the selected HRTF. In this way, several or all of the HRTFs may be provided by a single pair of filters by loading appropriate filter coefficients into their registers.

The input to the user's auditory system consists of two signals, namely sound pressures at the left eardrum and sound pressures at the right eardrum, in the following termed the binaural sound signals. Thus, if sound pressures are accurately reproduced at the eardrums, the human auditory system will not be able to distinguish the reproduced sound pressures from sound pressures originated from a 3-dimensional spatial sound field.

It is not fully known how the human auditory system extracts information about distance and direction to a sound source, but it is known that the human auditory system uses a number of cues in this determination. Among the cues are spectral cues, reverberation cues, interaural time differences (ITD), interaural phase differences (IPD) and interaural level differences (ILD).

The transmission of a sound wave from a sound source positioned at a given direction and distance in relation to the left and right ears of the listener is described in terms of two transfer functions, one for the left ear and one for the right ear, that include any linear distortion, such as coloration, interaural time differences and interaural spectral differences. Such a set of two transfer functions, one for the left ear and one for the right ear, is called a HRTF. Each transfer function of the HRTF is defined as the ratio between a sound pressure p generated by a plane wave at a specific point in or close to the appertaining ear canal (p_{L} in the left ear canal and p_{R} in the right ear canal) in relation to a reference. The reference traditionally chosen is the sound pressure p_{I} that would have been generated by a plane wave at a position right in the middle of the head with the listener absent.

The HRTF changes with direction and distance of the sound source in relation to the ears of the listener. It is possible to measure the HRTF for any direction and distance and simulate the HRTF, e.g. electronically, e.g. by pair of filters. If such pair of filters are inserted in the signal path between a playback unit, such as a media player, e.g. an Ipod ®, and headphones used by a listener, the listener will achieve the perception that the sounds generated by the headphones originate from a sound source positioned at the distance and in the direction as defined by the HRTF simulated by the pair of filters, because of the approximately true reproduction of the sound pressures in the ears.

The HRTF contains all information relating to the sound transmission to the ears of the listener, including diffraction around the head, reflections from shoulders, reflections in the ear canal, etc., and therefore, due to the different anatomy of different individuals, the HRTFs are different for different individuals.

However, it is possible to provide general HRTFs which are sufficiently close to corresponding individual HRTFs for users in general to obtain the same sense of direction of arrival of a sound signal that has been filtered with pair of filters with the general HRTFs as of a sound signal that has been filtered with the corresponding individual HRTFs of the individual in question.

General HRTFs are disclosed in WO 93/22493.

For some directions of arrival, corresponding HRTFs may be constructed by approximation, for example by interpolating HRTFs corresponding to neighbouring angles of sound incidence, the interpolation being carried out as a weighted average of neighbouring HRTFs, or an approximated HRTF can be provided by adjustment of the linear phase of a neighbouring HTRF to obtain substantially the interaural time difference corresponding to the direction of arrival for which the approximated HRTF is intended.

For convenience, the pair of transfer functions of a pair of filters simulating an HRTF is also denoted a HRTF even though the pair of filters can only approximate an HRTF.

Electronic simulation of the HRTFs by a pair of filters causes sound to be reproduced by the hearing device in such a way that the user perceives sound sources to be localized outside the head in specific directions. Thus, sound reproduced with pairs of filters with a HRTF makes it possible to guide the user in a certain direction.

The processor may be configured for determining directions towards each of the selected POIs with relation to the determined geographical position and head yaw of the user, selecting pairs of filters with HRTFs corresponding to the determined directions, and controlling the sound generator for sequentially outputting audio signals with spoken information on the selected POIs in sequence through the respective selected pairs of filters so that the user hears spoken information on the POIs from the respective directions towards the POIs.

Thus, a navigation system is provided that relies on communication to the user of spoken information on objects in the field of view of the user with the hearing device.

The spoken information may be communicated with a sense of direction so that spoken information relating to a specific site within the field of view of the user will be perceived by the user to be emitted by a sound source located at the site in question independent of possible head movements, i.e. changes of head yaw, during transmission of the spoken information.

For example, the user may arrive at a town square, with many sites of interest. With a user interface of the navigation system, the user may then request the navigation system to provide information on one POI, the user is currently looking at, and possibly the user has also specified the type(s) of POIs of interest to the user, e.g. historical sites. In response to the user request, the navigation system then selects the POI of any type, or of the specified type, closest to the centre of the field of view of the user based on the determined head yaw and also within the first threshold distance approximately equal to the largest width of the square. Then, the processor controls the sound generator to output spoken information on the selected POI, provided that the distance measured with the distance measurement unit matches the distance to the POI.

The user may be provided with the option to select more than one POI within the field of view, in which case, the processor controls the sound generator to sequentially output spoken information on the respective selected POIs. The spoken information may be perceived to be emitted from a sound source positioned at the respective POI.

In this way, the user is provided with desired information on the surroundings without a need to visually consult a display of the surroundings.

The user may also request the navigation system to guide the user to a selected geographical position, such as the next interesting location on a guided tour. Thus, preferably the processor is also configured for determining a direction towards a selected geographical destination with relation to the determined geographical position and head yaw of the user, and controlling the sound generator to output audio signals guiding the user, and selecting a pair of tilters with a HRTF corresponding to the determined direction towards the selected geographical destination so that the user perceives to hear sound arriving from a sound source located in the determined direction.

The navigation system may contain a database of POIs in a way well-known in conventional hand-held GPS-units.

Some or all of the POI records of the database of the navigation system include audio files with spoken information on the respective POI.

Some POIs may move as a function of time, e.g. during sport events, such as cycle races, car races, marathons, etc., the position of various participants or groups of participants may be recorded and stored in a database in real time during the event for access by the navigation system. Likewise, the positions as function of time for public transportation vehicles may be recorded and stored in a database in real time for access by the navigation system.

The processor may be configured for taking information on position as a function of time into account.

Alternatively, or additionally, the navigation system may have access to remote servers hosting databases on POIs, e.g. through a Wide-Area-Network, or a Local Area Network, e.g. providing access to the Internet.

Thus, the navigation system may have a wireless antenna, transmitter, and receiver for communicating over a wireless network with a remote server accommodating a database with information on POIs, e.g. including audio files with spoken information on some or all of the POIs. The wireless network may be a mobile telephone network, such as the GSM network.

The wireless network may provide a link through an Internet gateway to the Internet.

The navigation system may transmit the current position of the system to the remote server and requesting information on nearby POIs, preferably of one or more selected categories, and preferably sequenced in accordance with a selected rule of priority, such as proximity, popularity, user ratings, professional ratings, cost of entrance, opening hours with relation to actual time, etc. A maximum number of POIs may also be specified.

The server searches for matching POIs and transmits the matching records, e.g. including audio files, to the navigation system that sequentially presents spoken information on the matching POIs with the hearing instrument.

In the same way, the navigation system may communicate with a navigation enabled remote server and request navigation tasks to be performed by the remote navigation enabled server instead of performing the navigation tasks locally by the navigation system. The navigation system may communicate position data of the current position, e.g. current longitude, latitude; or, the received satellite signals, and position data of a destination, e.g. longitude, latitude; or street address, etc., to the navigation enabled server that performs the requested navigation tasks and transmits resulting data to the navigation system for presentation to the user.

The hearing device comprises one small loudspeaker, or a pair of small loudspeakers, designed to be held in place close to the user's ears. The loudspeaker, or pair of loudspeakers, is connected to the sound generator. The inertial measurement unit, or part of the inertial measurement unit, may be accommodated in a housing together with one loudspeaker of the hearing device; or, the inertial measurement unit may have parts accommodated in separate housings, each of which accommodates one of the pair of loudspeakers.

The hearing device may be an Ear-Hook, In-Ear, On-Ear, Over-the-Ear, Behind-the-Neck, Helmet, Headguard, etc, headset, headphone, earphone, earbud, ear defender, earmuff, etc.

Further, the hearing device may be a hearing aid, e.g. a binaural hearing aid, such as a BTE, a RIE, an ITE, an ITC, a CIC, etc, binaural hearing aid.

The hearing device may have a headband carrying two earphones. The headband is intended to be positioned over the top of the head of the user as is well-known from conventional headsets and headphones with one or two earphones. The inertial measurement unit, or part of the inertial measurement unit, may be accommodated in the headband of the hearing device.

The hearing device may have a neckband carrying two earphones. The neckband is intended to be positioned behind the neck of the user as is well-known from conventional neckband headsets and headphones with one or two earphones. The inertial measurement unit, or part of the inertial measurement unit, may be accommodated in the neckband of the hearing device.

The navigation system may also comprise a hand-held device, such as a GPS-unit, a smart phone, e.g. an Iphone, an Android phone, etc, e.g. with a GPS-unit, etc, interconnected with the hearing device.

The hearing device may comprise a data interface for transmission of data from the inertial measurement unit to the hand-held device.

The data interface may be a wired interface, e.g. a USB interface, or a wireless interface, such as a Bluetooth interface, e.g. a Bluetooth Low Energy interface.

The hearing device may comprise an audio interface for reception of an audio signal from the hand-held device.

The audio interface may be a wired interface or a wireless interface.

The data interface and the audio interface may be combined into a single interface, e.g. a USB interface, a Bluetooth interface, etc.

The hearing device may for example have a Bluetooth Low Energy data interface for exchange of head jaw values and control data between the hearing device and the hand-held device, and a wired audio interface for exchange of audio signals between the hearing device and the hand-held device.

Based on received head yaw values, the hand-held device can display maps on the display of the hand-held device in accordance with orientation of the head of the user as projected onto a horizontal plane, i.e. typically corresponding to the plane of the map. For example, the map may be displayed with the position of the user at a central position of the display, and the current head x-axis pointing upwards.

Selected POIs may also be indicated on the displayed map in addition to the spoken information presented to the user. Additional POIs for which spoken information is not presented to the user may also be displayed on the map, preferably with icons that distinguishes these POIs from the selected POIs.

A user interface of the hand-held device may constitute the user interface of the navigation system or a part of the user interface of the navigation system.

For example, the user may use the user interface of the hand-held device to select a specific POI that the user desires to visit in a way well-known from prior art hand-held GPS-units.

The user may calibrate directional information by indicating when his or her head x-axis is kept in a known direction, for example by pushing a certain push button when looking, e.g. in the direction of Magnetic North, or True North, i.e. the direction along the earth's surface towards the geographic North Pole. The user may obtain information on the known direction, e.g. from the position of the Sun on a certain time of day, or the position of the North Star, or from a map, etc.

The hand-held device may display maps with a suggested route to the desired geographical destination as a supplement to the aural guidance provided by the navigation system. The hand-held device may further transmit spoken guiding instructions to the hearing device through the audio interface as is well-known in the art, supplementing the other audio signals provided by the navigation system.

The hand-held device may accommodate the sound generator of the navigation system.

The hand-held device may accommodate the processor, or parts of the processor, of the navigation system.

The hand-held device may accommodate all or some of the one or more pairs of filters with HRTFs of the navigation system.

The hand-held device may accommodate a database with POIs and with audio files containing spoken, e.g. narrated, information on some or all of the respective POIs.

The hand-held device may accommodate the text-to-speech processor for converting text information on POIs into spoken information on the POIs.

The hand-held device may accommodate the interface of the navigation system for connection with a Wide-Area-Network and/or a Local-Area-Network.

For example, the hand-held device may have the wireless antenna, transmitter, and receiver of the personal communication system for communicating over a wireless network with a remote server accommodating a database with information on POIs, e.g. including audio files with spoken information on some or all of the POIs. The wireless network may be a mobile telephone network, such as the GSM network.

The hand-held device may accommodate the processor that is configured for requesting information on a particular POI via the Wide-Area-Network and/or Local-Area-Network, and for receiving the information via the network.

The hearing device may have a microphone for reception of spoken commands by the user, and the processor may be configured for decoding of the spoken commands and for controlling the navigation system to perform the actions defined by the respective spoken commands.

The hearing device may comprise an ambient microphone for receiving ambient sound for user selectable transmission towards at least one of the ears of the user.

In the event that the hearing device provides a sound proof, or substantially, sound proof, transmission path for sound emitted by the loudspeaker(s) of the hearing device towards the ear(s) of the user, the user may be acoustically disconnected in an undesirable way from the surroundings. This may for example be dangerous when moving in traffic.

The hearing device may have a user interface, e.g. a push button, so that the user can switch the microphone on and off as desired thereby connecting or disconnecting the ambient microphone and one loudspeaker of the hearing device.

The hearing device may have a mixer with an input connected to an output of the ambient microphone and another input connected to an output of the sound generator, and an output providing an audio signal that is a weighted combination of the two input audio signals.

The user input may further include means for user adjustment of the weights of the combination of the two input audio signals, such as a dial, or a push button for incremental adjustment.

The hearing device may have a threshold detector for determining the loudness of the ambient signal received by the ambient microphone, and the mixer may be configured for including the output of the ambient microphone signal in its output signal only when a certain threshold is exceeded by the loudness of the ambient signal.

Further ways of controlling audio signals from an ambient microphone and a voice microphone is disclosed in US 2011/0206217 A1.

The navigation system also has a GPS-unit for determining the geographical position of the user based on satellite signals in the well-known way. Hereby, the navigation system can provide the user's current geographical position based on the GPS-unit and the orientation of the user's head based on data from the hearing device.

Throughout the present disclosure, the term GPS-unit is used to designate a receiver of satellite signals of any satellite navigation system that provides location and time information anywhere on or near the Earth, such as the satellite navigation system maintained by the United States government and freely accessible to anyone with a GPS receiver and typically designated "the GPS-system", the Russian GLObal NAvigation Satellite System (GLONASS), the European Union Galileo navigation system, the Chinese Compass navigation system, the Indian Regional Navigational Satellite System, etc, and also including augmented GPS, such as StarFire, Omnistar, the Indian GPS Aided Geo Augmented Navigation (GAGAN), the European Geostationary Navigation Overlay Service (EGNOS), the Japanese Multifunctional Satellite Augmentation System (MSAS), etc.

In augmented GPS, a network of ground-based reference stations measure small variations in the GPS satellites' signals, correction messages are sent to the GPS-system satellites that broadcast the correction messages back to Earth, where augmented GPS-enabled receivers use the corrections while computing their positions to improve accuracy. The International Civil Aviation Organization (ICAO) calls this type of system a satellite-based augmentation system (SBAS).

Like the inertial measurement unit, the GPS-unit may be accommodated in the hearing device for determining the geographical position of the user, when the user wears the hearing device in its intended operational position on the head, based on satellite signals in the well-known way. Hereby, the user's current position and orientation can be provided to the user based on data from the hearing device.

Alternatively, the GPS-unit may be included in the hand-held device that is interconnected with the hearing device. The hearing device may accommodate a GPS-antenna that is connected with the GPS-unit in the hand-held device, whereby reception of GPS-signals is improved in particular in urban areas where, presently, reception of GPS-signals by hand-held GPS-units can be difficult.

The inertial measurement unit may also have a magnetic compass for example in the form of a tri-axis magnetometer facilitating determination of head yaw with relation to the magnetic field of the earth, e.g. with relation to Magnetic North.

The sound generator of the navigation system is connected for outputting audio signals to the loudspeakers via the one or more pairs of filters with respective HRTFs, each of which may be selectively configured for filtering the output from the sound generator into a binaural acoustic sound signal emitted towards the eardrums of the user. In this way, sound from the hearing device will be perceived by the user as coming from a sound source positioned in a direction corresponding to the respective HRTF of the current pair of filters.

For example, sound can be reproduced with an HRTF corresponding to the direction towards a desired geographical destination, so that the user perceives the sound source to be located and operated like a sonar beacon at the desired geographical destination. Thus, the navigation system utilizes a virtual sonar beacon located at the desired geographical destination to guide the user to the desired geographical destination. The virtual sonar beacon operates until the user reaches the geographical position or is otherwise aborted by the user.

The sonar beacon may emit any sound suitable for guidance of the user, including music and speech.

In this way, the user is relieved from the task of watching a map in order to follow a suitable route towards the desired geographical destination.

The user is also relieved from listening to spoken commands intending to guide the user along a suitable route towards the desired geographical destination.

Further, the user is free to explore the surroundings and for example walk along certain streets as desired, e.g. act on impulse, while listening to sound perceived to come from the direction toward the desired geographical destination (also) to be visited, whereby the user is not restricted or urged to follow a specific route determined by the navigation system.

The sound generator may output audio signals representing any type of sound suitable for this purpose, such as speech, e.g. from an audio book, radio, etc, music, tone sequences, etc.

The sound generator may output a tone sequence, e.g. of the same frequency, or the frequency of the tones may be increased or decreased with distance to the desired geographical destination. Alternatively, or additionally, the repetition rate of the tones may be increased or decreased with distance to the desired geographical destination.

The user may for example decide to listen to a radio station while walking, and the sound generator generates audio signals originating from the desired radio station filtered by the HRTF in question, so that the user perceives to hear the desired radio station as a sonar beacon located at the desired geographical destination to be visited at some point in time.

The user may decide to follow a certain route determined and suggested by the navigation system, and in this case the processor controls the pair of filters so that the audio signals from the sound generator are filtered by HRTFs corresponding to desired directions along streets or other paths along the determined route. Changes in indicated directions will be experienced at junctions and may be indicated by increased loudness or pitch of the sound. Also in this case, the user is relieved from having to consult a map in order to be able to follow the determined route.

The navigation system may be operated without a visual display, and thus without displayed maps to be consulted by the user, rather the user specifies desired geographical destinations with spoken commands and receives aural guidance by sound emitted by the hearing device in such a way that the sound is perceived by the user as coming from the direction towards the desired geographical destination.

Thus, the navigation system may operate without a hand-held device, and rely on aural user interface using spoken commands and aural guidance, including spoken messages.

In this case, the hearing device comprises the components of the navigation system.

Thus, the navigation system comprises a hearing device configured to be head worn and having
one or more loudspeakers for emission of sound towards one or both ears of a user and accommodating
the inertial measurement unit configured for determining head yaw, when the user wears the hearing device in its intended operational position on the user's head,
a distance measurement unit configured to measure distance from the user to an object in the field of view of the user,
the GPS unit for determining the geographical position of the user,
the sound generator connected for outputting audio signals to the loudspeakers, and
the processor configured for, based on the determined head yaw, selecting a POI in the field of view of the user, receiving a distance measurement from the distance measurement unit, determining the distance from the user to the selected POI based on geographical positions of the user and the selected POI, and provided that absolute value of a difference between the received distance measurement and the determined distance from the user to the selected POI is less than a predetermined obstruction threshold, controlling the sound generator to output audio signals with spoken information on the selected POI.

The hearing device may further comprise the one or more pair(s) of filters with HRTFs, each of which may be selectively configured for filtering the output from the sound generator into a binaural acoustic sound signal emitted towards the eardrums of the user and perceived by the user as coming from a sound source positioned in a direction corresponding to the respective HRTF.

In absence of GPS-signal, e.g. when buildings or terrain block the satellite signals, the navigation system may continue its operation relying on data from the inertial measurement unit of the hearing device utilising dead reckoning as is well-known from Inertial navigation systems in general. The processor uses information from gyros and accelerometers of the inertial measurement unit of the hearing device to calculate speed and direction of travel as a function of time and integrates to determine geographical positions of the user with the latest determined position based on GPS-signals as a starting point, until appropriate GPS-signal reception is resumed.

As used herein, the terms "processor", "signal processor", "controller", "system", etc., are intended to refer to CPU-related entities, either hardware, a combination of hardware and software, software, or software in execution.

For example, a "processor", "signal processor", "controller", "system", etc., may be, but is not limited to being, a process running on a processor, a processor, an object, an executable file, a thread of execution, and/or a program.

By way of illustration, the terms "processor", "signal processor", "controller", "system", etc., designate both an application running on a processor and a hardware processor. One or more "processors", "signal processors", "controllers", "systems" and the like, or any combination hereof, may reside within a process and/or thread of execution, and one or more "processors", "signal processors", "controllers", "systems", etc., or any combination hereof, may be localized on one hardware processor, possibly in combination with other hardware circuitry, and/or distributed between two or more hardware processors, possibly in combination with other hardware circuitry.

HRFTs may form part of a processor.

### BRIEF DESCRIPTION OF THE DRAWINGS

Below, the invention will be described in more detail with reference to the exemplary embodiments illustrated in the drawings, wherein
- Fig. 1: shows a hearing device with an inertial measurement unit and a distance measurement unit,
- Fig. 2: shows (a) a head reference coordinate system and (b) head yaw,
- Fig. 3: shows (a) head pitch and (b) head roll,
- Fig. 4: is a block diagram of one embodiment of the new navigation system,
- Fig. 5: illustrates one exemplary use of the new navigation system, and
- Fig. 6: schematically illustrates the operation of the system,
- Fig. 7: schematically illustrates an example of the operation of the system,
- Fig. 8: schematically illustrates another example of the operation of the system,
- Fig. 9: schematically illustrates yet another example of the operation of the system,
- Fig. 10: schematically illustrates still another example of the operation of the system, and
- Fig. 11: schematically illustrates yet, still another example of the operation of the system.

### DETAILED DESCRIPTION OF THE DRAWINGS

The new navigation system will now be described more fully hereinafter with reference to the accompanying drawings, in which various embodiments are shown. The accompanying drawings are schematic and simplified for clarity, and they merely show details which are essential to the understanding of the new navigation system, while other details have been left out. The new navigation system may be embodied in different forms not shown in the accompanying drawings and should not be construed as limited to the embodiments and examples set forth herein. Rather, these embodiments and examples are provided so that this disclosure will be thorough and complete, and will fully convey the scope of the invention to those skilled in the art.

Similar reference numerals refer to similar elements in the drawings.

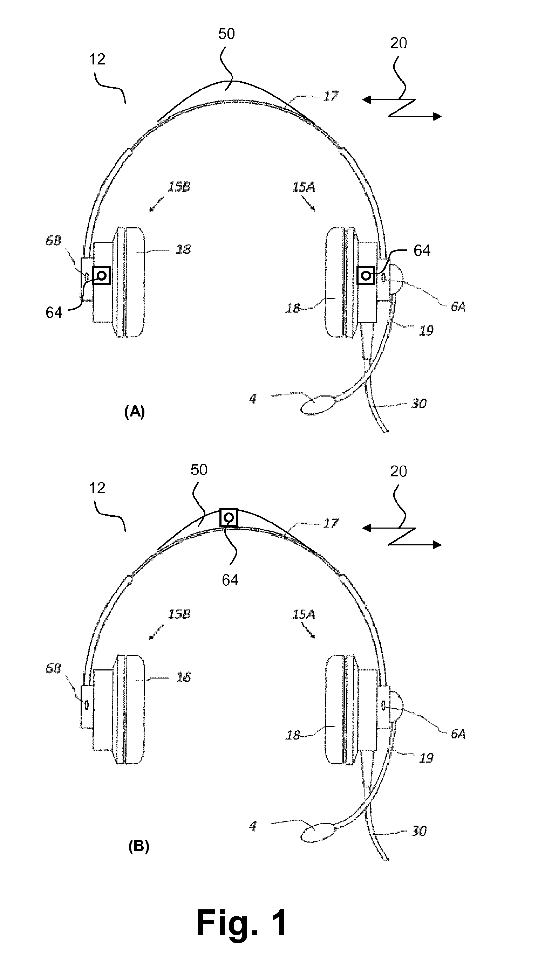

Fig. 1A shows an exemplary hearing device 12 having a headband 17 carrying two earphones 15A, 15B similar to a conventional corded headset with two earphones 15A, 15B interconnected by a headband 17.

Each earphone 15A, 15B of the illustrated hearing device 12 comprises an ear pad 18 for enhancing the user comfort and blocking out ambient sounds during listening or two-way communication.

A microphone boom 19 with a voice microphone 4 at the free end extends from the first earphone 15A. The microphone 4 is used for picking up the user's voice e.g. during two-way communication via a mobile phone network and/or for reception of user commands to the navigation system 10.

The housings of the first and second earphones 15A, 15B comprise the distance measurement unit 64, e.g. two cameras for use in photogrammetry as is well-known in the art, or a laser source in one of the housings and a linear detector in the other housing for optical triangulation as is well-known in the art.

The housing of the first earphone 15A comprises a first ambient microphone 6A and the housing of the second earphone 15B comprises a second ambient microphone 6B.

The ambient microphones 6A, 6B are provided for picking up ambient sounds, which the user can select to mix with the sound received from a hand-held device 14 (not shown), e.g. a mobile phone, a media player, such as an Ipod, a GPS-unit, a smart phone, a remote control for the hearing device 12, etc.

The user can select to mix ambient sounds picked up by the ambient microphones 6A, 6B with sound received from the hand-held device 14 (not shown) as already mentioned.

When mixed-in, sound from the first ambient microphone 6A is directed to the speaker of the first earphone 15A, and sound from the second ambient microphone 6B is directed to the speaker of the second earphone 15B.

A cord 30 extends from the first earphone 15A to a hand-held device (not shown).

A wireless transceiver in the earphone 15 is wirelessly connected by a wireless link 20 to a wireless transceiver in the hand-held device (not shown).

The cord 30 may be used for transmission of audio signals from the microphones 4, 6A, 6B to the hand-held device (not shown), while the wireless network may be used for data transmission of data from the inertial measurement unit to the hand-held device (not shown) and commands from the hand-held device (not shown) to the hearing device 12, such as turn a selected microphone 4, 6A, 6B on or off.

The wireless network may be a Bluetooth network, such as a Bluetooth low energy network.

A similar hearing device 12 may be provided without a wireless transceiver so that the cord 30 is used for both transmission of audio signals and data signals; or, a similar hearing device 12 may be provided without a cord, so that a wireless network is used for both transmissions of audio signals and data signals.

A similar hearing device 12 may be provided without the microphone boom 19, whereby the microphone 4 is provided in a housing on the cord as is well-known from prior art headsets.

A similar hearing device 12 may be provided without the microphone boom 19 and microphone 4 functioning as a headphone instead of a headset.

An inertial measurement unit 50 is accommodated in a housing mounted on or integrated with the headband 17 and interconnected with components in the earphone housing 16 through wires running internally in the headband 17 between the inertial measurement unit 50 and the earphone 15.

The user interface of the hearing device 12 is not shown, but may include one or more push buttons, and/or one or more dials as is well-known from conventional headsets.

The orientation of the head of the user is defined as the orientation of a head reference coordinate system with relation to a reference coordinate system with a vertical axis and two horizontal axes at the current location of the user.

Fig. 1 B shows an exemplary hearing device 12 similar to the hearing device shown in Fig. 1A except for the fact that the distance measurement unit 64 of the hearing device 12 of Fig. 1 B is accommodated in the headband 50. The distance measurement unit 64 may for example be a single camera with an optical range finder, or a single camera cooperating with a beamsplitter for use in photogrammetry as is well-known in the art, or a time-of-flight unit, e.g. with a laser source or an ultrasonic sound source as is well-known in the art.

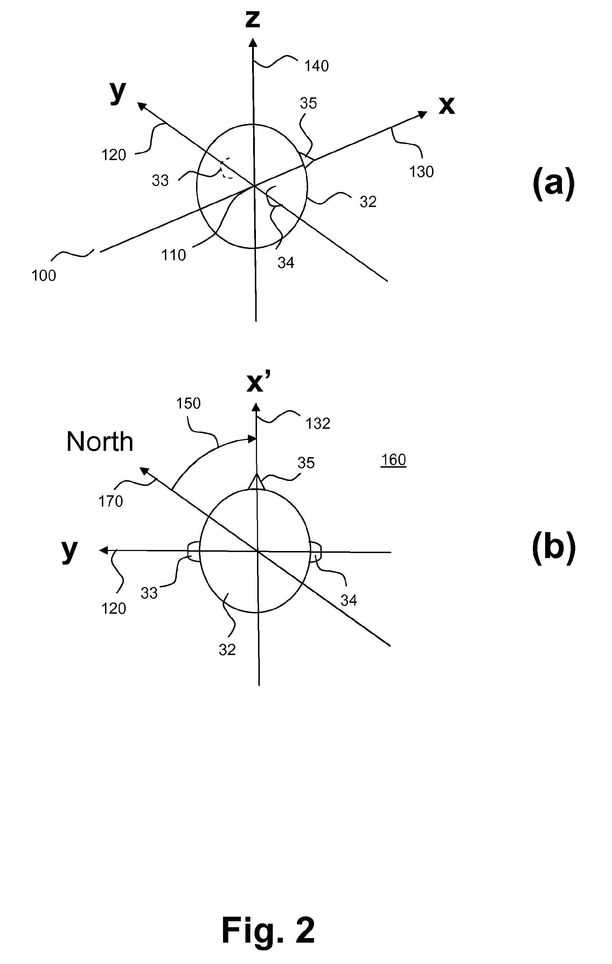

Fig. 2(a) shows a head reference coordinate system 100 that is defined with its centre 110 located at the centre of the user's head 32, which is defined as the midpoint 110 of a line 120 drawn between the respective centres of the eardrums (not shown) of the left and right ears 33, 34 of the user.

The x-axis 130 of the head reference coordinate system 100 is pointing ahead through a centre of the nose 35 of the user, its y-axis 112 is pointing towards the left ear 33 through the centre of the left eardrum (not shown), and its z-axis 140 is pointing upwards.

Fig. 2(b) illustrates the definition of head yaw 150. Head yaw 150 is the angle between the current x-axis' projection x' 132 onto a horizontal plane 160 at the location of the user, and a horizontal reference direction 170, such as Magnetic North or True North.

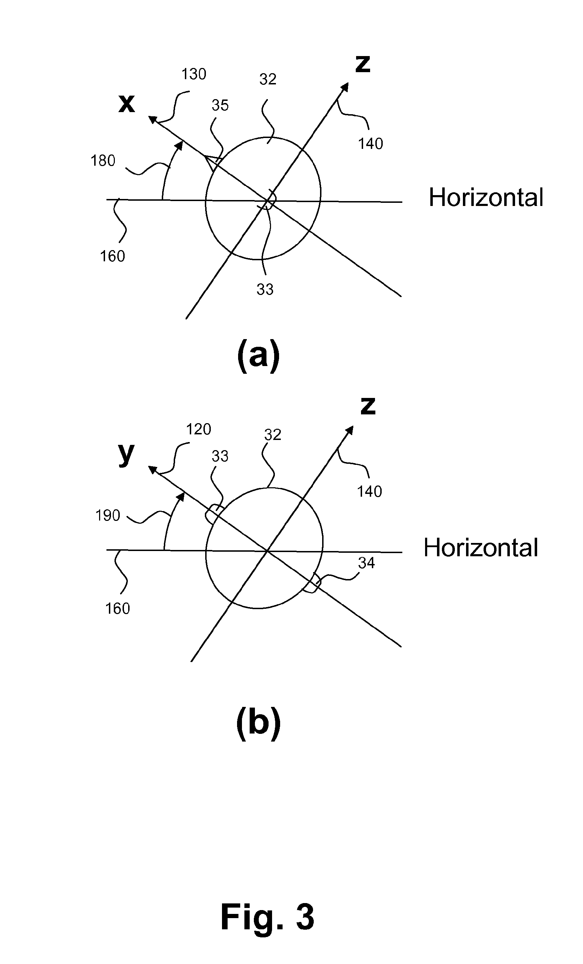

Fig. 3(a) illustrates the definition of head pitch 180. Head pitch 180 is the angle between the current x-axis 130 and the horizontal plane 160.

Fig. 3(b) illustrates the definition of head roll 190. Head roll 190 is the angle between the y-axis and the horizontal plane.

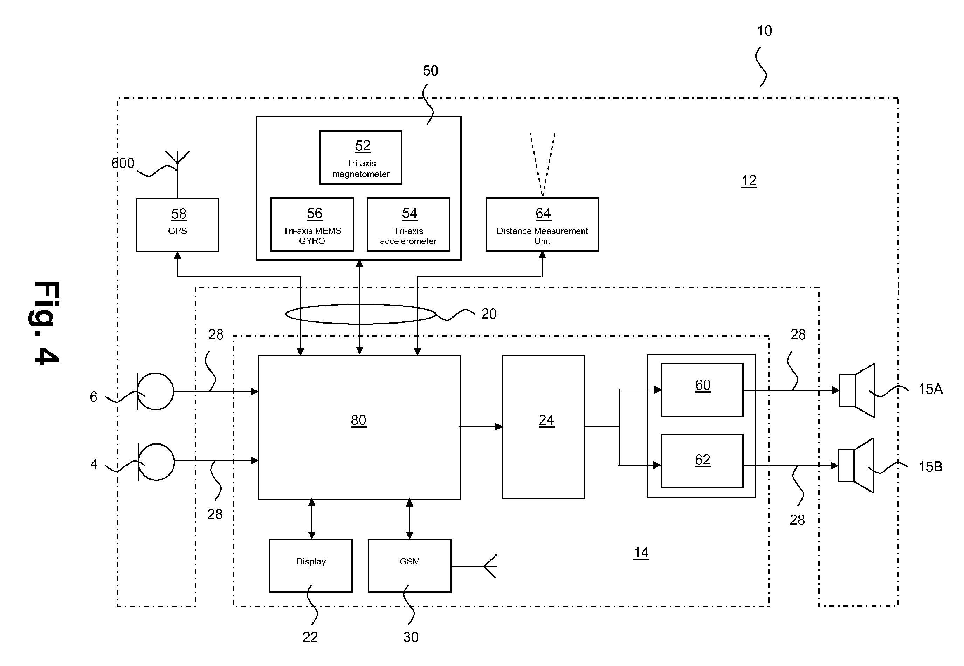

Fig. 4 shows a block diagram of a new navigation system 10 comprising a hearing device 12 and a hand-held device 14.

The various components of the system 12 may be distributed otherwise between the hearing device 12 and the hand-held device 14. For example, the hand-held device 14 may accommodate the GPS-receiver 58. Another system 10 may not have a hand-held device 14 so that all the components of the system 10 are accommodated in the hearing device 12. The system 10 without a hand-held device 14 does not have a display, and speech synthesis is used to issue messages and instructions to the user and speech recognition is used to receive spoken commands from the user.

The illustrated navigation system 10 comprises a hearing device 12 comprising electronic components including two loudspeakers 15A, 15B for emission of sound towards the ears of the user (not shown), when the hearing device 12 is worn by the user in its intended operational position on the user's head.

The hearing device 12 shown in Fig. 4 may be of the type shown in Fig. 1, or the illustrated hearing device 12 may be of any other known type, including an Ear-Hook, In-Ear, On-Ear, Over-the-Ear, Behind-the-Neck, Helmet, Headguard, etc, headset, headphone, earphone, ear defenders, earmuffs, etc.

Further, the hearing device 12 may be a binaural hearing aid, such as a BTE, a RIE, an ITE, an ITC, a CIC, etc, binaural hearing aid.

The illustrated hearing device 12 has a voice microphone 4 e.g. accommodated in an earphone housing or provided at the free end of a microphone boom mounted to an earphone housing.

The hearing device 12 further has one or two ambient microphones 6A, 6B, e.g. at each ear, for picking up ambient sounds.

The hearing device 12 has an inertial measurement unit 50 positioned for determining head yaw, head pitch, and head roll, when the user wears the hearing device 12 in its intended operational position on the user's head.

The illustrated inertial measurement unit 50 has tri-axis MEMS gyros 56 that provide information on head yaw, head pitch, and head roll in addition to tri-axis accelerometers 54 that provide information on three dimensional displacement of the hearing device 12.

The hearing device 12 also has a GPS-unit 58 for determining the geographical position of the user, when the user wears the hearing device 12 in its intended operational position on the head, based on satellite signals in the well-known way. Hereby, the user's current position and orientation can be provided to the user based on data from the hearing device 12.

Optionally, the hearing device 12 accommodates a GPS-antenna configured for reception of GPS-signals, whereby reception of GPS-signals is improved in particular in urban areas where, presently, reception of GPS-signals can be difficult.

In a hearing device 12 without the GPS-unit 58, the hearing device 12 has an interface for connection of the GPS-antenna with an external GPS-unit, e.g. a hand-held GPS-unit, whereby reception of GPS-signals by the hand-held GPS-unit is improved in particular in urban areas where, presently, reception of GPS-signals by hand-held GPS-units can be difficult.

The hearing device 12 further has a distance measurement unit 64 for determination of a distance from the user to an object in the field of view of the user. The distance measurement unit may for example be an optical triangulation unit, a light stripe unit, a photogrammetric unit, a laser time-of-flight unit, an ultrasonic time-of-flight unit, a laser tracker unit, an optical range finder, etc, all of which are well-known in the art.

The illustrated inertial measurement unit 50 also has a magnetic compass in the form of a tri-axis magnetometer 52 facilitating determination of head yaw with relation to the magnetic field of the earth, e.g. with relation to Magnetic North.

The hand-held device 14 of the navigation system 10 has a processor 80 with input/output ports connected to the sensors of the inertial measurement unit 50, and configured for determining and outputting values for head yaw, head pitch, and head roll, when the user wears the hearing device 12 in its intended operational position on the user's head.

The processor 80 may further have inputs connected to accelerometers of the inertial measurement unit, and configured for determining and outputting values for displacement in one, two or three dimensions of the user when the user wears the hearing device 12 in its intended operational position on the user's head, for example to be used for dead reckoning in the event that GPS-signals are lost.

Thus, the illustrated navigation system 10 is equipped with a complete attitude heading reference system (AHRS) for determination of the orientation of the user's head that has MEMS gyroscopes, accelerometers and magnetometers on all three axes. The processor provides digital values of the head yaw, head pitch, and head roll based on the sensor data.

The hearing device 12 has a data interface 20 for transmission of data from the inertial measurement unit to the processor 80 of the hand-held device 14, e.g. a smart phone with corresponding data interface. The data interface 20 may be a Bluetooth Low Energy interface.

The hearing device 12 further has a conventional wired audio interface 28 for audio signals from the voice microphone 4, and for audio signals to the loudspeakers 15A, 15B for interconnection with the hand-held device 14 with corresponding audio interface 28.

This combination of a low power wireless interface for data communication and a wired interface for audio signals provides a superior combination of high quality sound reproduction and low power consumption of the navigation system 10.

The hearing device 12 has a user interface (not shown), e.g. with push buttons and dials as is well-known from conventional headsets, for user control and adjustment of the hearing device 12 and possibly the hand-held device 14 interconnected with the hearing device 12, e.g. for selection of media to be played.

The hand-held device 14 receives head yaw from the inertial measurement unit of the hearing device 12 through the wireless interface. With this information, the hand-held device 14 can display maps on its display in accordance with orientation of the head of the user as projected onto a horizontal plane, i.e. typically corresponding to the plane of the map. For example, the map may automatically be displayed with the position of the user at a central position of the display, and the current head x-axis pointing upwards.

The user may use the user interface of the hand-held device 14 to input information on a geographical position the user desires to visit in a way well-known from prior art hand-held GPS-units.

The hand-held device 14 may display maps with a suggested route to the desired geographical destination as a supplement to the aural guidance provided through the hearing device 12.

The hand-held device 14 may further transmit spoken guiding instructions to the hearing device 12 through the audio interface 28 as is well-known in the art, supplementing the other audio signals provided to the hearing device 12.

In addition, the microphone of hearing device 12 may be used for reception of spoken commands by the user, and the processor 80 may be configured for speech recognition, i.e. decoding of the spoken commands, and for controlling the navigation system 10 to perform actions defined by respective spoken commands.

The hand-held device 14 filters the output of a sound generator 24 of the hand-held device 14 with a pair of filters 60, 62 with an HRTF into two output audio signals, one for the left ear and one for the right ear, corresponding to the filtering of the HRTF of a direction in which the user should travel in order to visit a desired geographical destination.

This filtering process causes sound reproduced by the hearing device 12 to be perceived by the user as coming from a sound source localized outside the head from a direction corresponding to the HRTF in question, i.e. from a virtual sonar beacon located at the desired geographical destination.

In this way, the user is relieved from the task of watching a map in order to follow a suitable route towards the desired geographical destination.

The user is also relieved from listening to spoken commands intending to guide the user along a suitable route towards the desired geographical destination.

Further, the user is free to explore the surroundings and for example walk along certain streets as desired, e.g. act on impulse, while listening to sound perceived to come from the direction toward the desired geographical destination (also) to be visited, whereby the user is not restricted to follow a specific route determined by the navigation system 10.

The sound generator 24 may output audio signals representing any type of sound suitable for this purpose, such as speech, e.g. from an audio book, radio, etc, music, tone sequences, etc.

The user may for example decide to listen to a radio station while walking, and the sound generator 24 generates audio signals reproducing the signals originating from the desired radio station filtered by pair of filters 60, 62 with the HRTFs in question, so that the user perceives to hear the desired music from the direction towards the desired geographical destination to be visited at some point in time.

At some point in time, the user may decide to follow a certain route determined and suggested by the navigation system 10, and in this case the processor controls the HRTF filters so that the audio signals from the sound generator 24 are filtered by HRTFs corresponding to desired directions along streets or other paths along the determined route. Changes in indicated directions will be experienced at junctions and may be indicated by increased loudness or pitch of the sound. Also in this case, the user is relieved from having to visually consult a map in order to be able to follow the determined route.

In the event that the processor controls the sound generator 24 to output a tone sequence, e.g. of the same frequency, the frequency of the tones may be increased or decreased with distance to the desired geographical destination. Alternatively, or additionally, the repetition rate of the tones may be increased or decreased with distance to the desired geographical destination.

The navigation system 10 may be operated without using the visual display, i.e. without the user consulting displayed maps, rather the user specifies desired geographical destinations with spoken commands and receives aural guidance by sound emitted by the hearing device 12 in such a way that the sound is perceived by the user as coming from the direction towards the desired geographical destination.

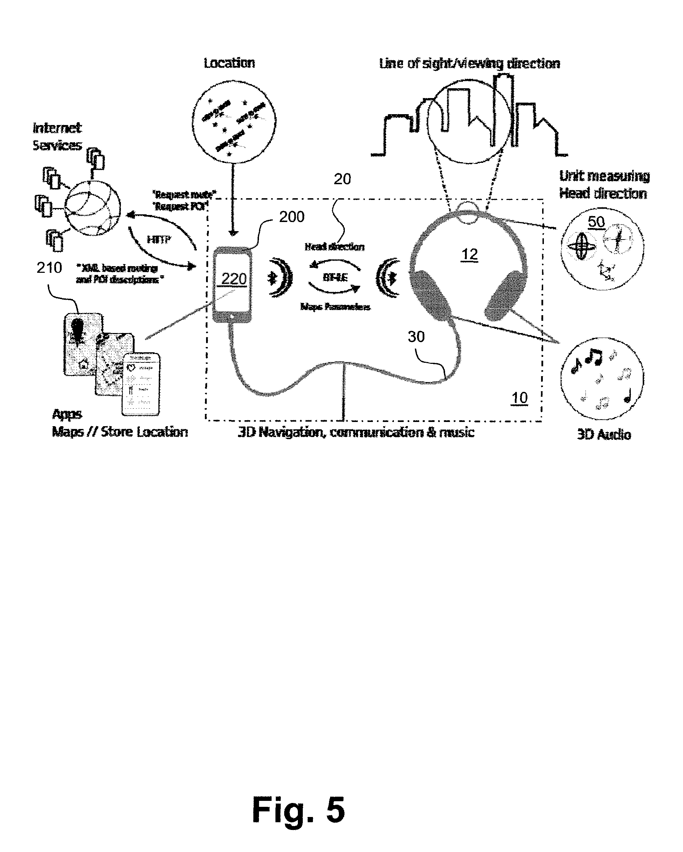

Fig. 5 illustrates the configuration and operation of an example of the new navigation system 10 shown in Fig. 4, with the hearing device 12 together with a hand-held device 14, which in the illustrated example is a smart phone 200, e.g. an Iphone, an Android phone, etc, with a navigation app containing instructions for the processor of the smart phone to perform the operations of the processor 80 of the navigation system 10 and of the pair of filters 60, 62 with an HRTF.

The hearing device 12 is connected to the smart phone 200 with a chord 30 providing a wired audio interface 28 between the two units 10, 200 for transmission of speech and music from the smart phone 200 to the hearing device 12, and speech from the voice microphone (not shown) to the smart phone 200 as is well-known in the art.

As indicated in Fig. 5 by the various exemplary map-images 210 displayed on the smart phone display 220, the navigation app is executed by the smart phone in addition to other tasks that the user selects to be performed simultaneously by the smart phone 200, such as playing music, and performing telephone calls when required.

The navigation app configures the smart phone 200 for data communication with the hearing device 12 through a wireless interface 20 available in the smart phone 200 and the hearing device 12, e.g. for reception of head yaw from the inertial measurement unit 50 and the distance measurements from the distance measurement unit 64 of the hearing device 12 shown in Fig. 4. In this way, the navigation app can control display of maps on the display of the smart phone 200 in accordance with orientation of the head of the user as projected onto a horizontal plane, i.e. typically corresponding to the plane of the map. For example, the map may be displayed with the position of the user at a central position of the display, and the head x-axis pointing upwards.

The illustrated navigation system 10 operates to position a virtual sonar beacon at a desired geographical location, whereby a guiding sound signal is transmitted to the ears of the user that is perceived by the user to arrive from a certain direction in which the user should travel in order to visit the desired geographical location. The guiding sound is generated by a sound generator 24 (shown in Fig. 4) of the smart phone 200, and the output of the sound generator 24 (shown in Fig. 4) is filtered with a pair of filters (shown in Fig. 4) of the smart phone 200 forming a selected HRTF, into a binaural audio signal output to the loudspeakers for emission of a corresponding binaural acoustic sound signal to the left ear and right ear of the user. The filter functions of the two filters approximate the HRTF corresponding to the direction from the user to the desired geographical location taking the yaw of the head of the user into account.

The user may calibrate directional information by indicating when his or her head x-axis is kept in a known direction, for example by pushing a certain push button when looking, e.g. in the direction of Magnetic North, or True North, i.e. the direction along the earth's surface towards the geographic North Pole. The user may obtain information on the known direction, e.g. from the position of the Sun on a certain time of day, or the position of the North Star, or from a map, etc.

The smart phone 200 may contain a database of POIs as is way well-known in conventional smart phones.

Some or all of the POI records of the database of the navigation system include audio files with spoken information on the respective POI.

Alternatively, or additionally, the navigation system may have access to remote servers hosting databases on POIs, e.g. through a Wide-Area-Network, or a Local Area Network, e.g. providing access to the Internet.

Thus, the navigation system may have a wireless antenna, transmitter, and receiver for communicating over a wireless network with a remote server accommodating a database with information on POIs, e.g. including audio files with spoken information on some or all of the POIs. The wireless network may be a mobile telephone network, such as a GSM network.

The wireless network may provide a link through an Internet gateway to the Internet.

The navigation system may transmit the current position of the system to the remote server and requesting information on nearby POIs, preferably of one or more selected categories, and preferably sequenced in accordance with a selected rule of priority, such as proximity, popularity, user ratings, professional ratings, cost of entrance, opening hours with relation to actual time, etc. A maximum number of POIs may also be specified.

The server searches for matching POIs and transmits the matching records, e.g. including audio files, to the navigation system that sequentially presents spoken information on the matching POIs with the hearing instrument.

The spoken information may include opening hours of POIs, time table of upcoming venues of POIs, etc.

The smart phone may be configured request navigation tasks to be performed by a remote navigation enabled server whereby the smart phone communicates position data of the current position, e.g. current longitude, latitude; or, the received satellite signals, and position data of a destination, e.g. longitude, latitude; or street address, etc., to the navigation enabled server that performs the requested navigation tasks and transmits resulting data to the smart phone for presentation to the user.

The user may request presentations of the POIs to be retrieved through the Internet from Wikipedia. Textual information on the POIs may then be acquired from Wikipedia by the navigation system and converted into speech by the text-to-speech converter of the smart phone.

At any time during use of the navigation system, the user may use the user interface to request a spoken presentation of a POI located at within the current field of view of the user, whether visible or not, e.g. by pushing a specific button located at the hearing device 12.

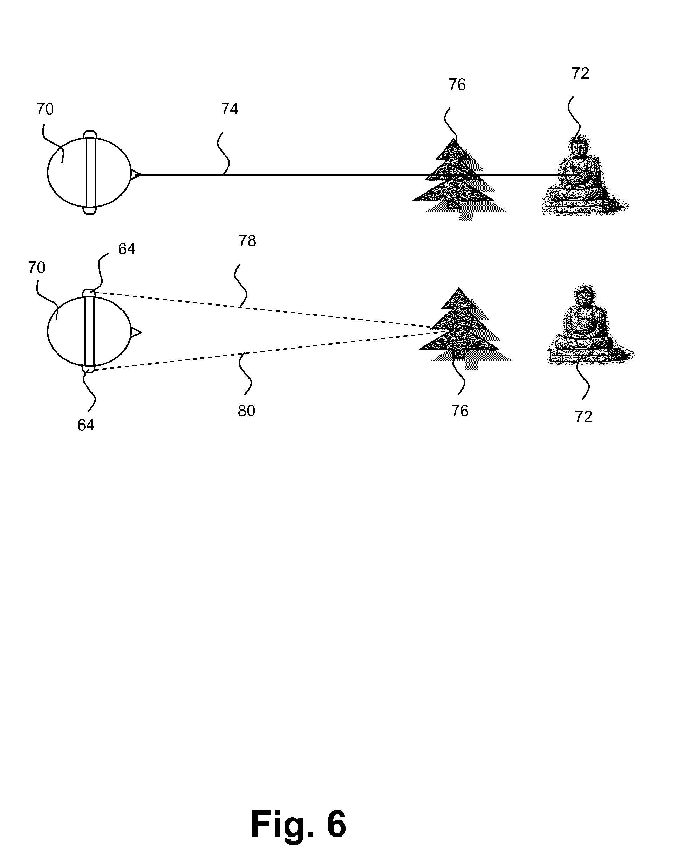

Fig. 6 schematically illustrates the operation of the navigation system in response to such a user request. The upper part of Fig. 6 illustrates a user 70 of the navigation system looking for a POI 72 residing along the current line-of-sight 74 of the user; however, the view of the POI is obstructed by an object 76 located along the line-of-sight 74 of the user 70 between the user 70 and the POI 72 in question. The lower part of Fig. 6 illustrates that the distance measurement unit 64, in the illustrated example, a photogrammetric unit with two cameras accommodated by the housings of the first and second earphones for use in photogrammetry as is well-known in the art. As illustrated by the dashed lines 78, 80, the distance measurement unit 64 determines the distance between the obstructing object 76 and the user. The processor of the navigation system compares this distance with the distance between the user 70 and the POI 72 as determined based on the geographical positions of the user and the POI provided by the GPS-system with which the navigation system cooperates. In the illustrated example, the distance from the user 70 to the object 76 is shorter than the distance to the POI 72, and the absolute value of the difference is larger than the predetermined obstruction threshold of 5m so that the processor of the navigation unit responds in accordance with the situation in which the view of the user towards the POI 72 is obstructed by another object, e.g. by not providing spoken information on the POI 72 to the user, until the user has moved to another position in which the user obtains an unobstructed view of the POI 72.

With the view of the POI 72 obstructed, the processor of the navigation system may alternatively, present spoken information to the user that the POI is hidden behind another object in the field of view, e.g. a spoken message, such as "view of POI obstructed", either alone or in addition to the spoken information on the POI in question. Additionally, the processor of the navigation system may be configured to offer navigation in a way well-known in the art of GPS devices, to a waypoint from which the user should be able to obtain an unobstructed view of the POI 72.

It is well-known that the view of certain POIs can be more or less spectacular in dependence of the direction of arrival to the POI in question, e.g. a city hall may look best when arriving from a direction providing a frontal view of the city hall with the city square in the field of view in front of it. The database with POIs may include information on preferred directions of arrival to some POIs and corresponding waypoints from which the user obtains the most spectacular view of the POI in question.

The processor of the navigation system may be configured to offer navigation in a way well-known in the art of GPS devices, to a waypoint from which the user obtains a preferred, or recommended, or most spectacular, view of the POI in question.

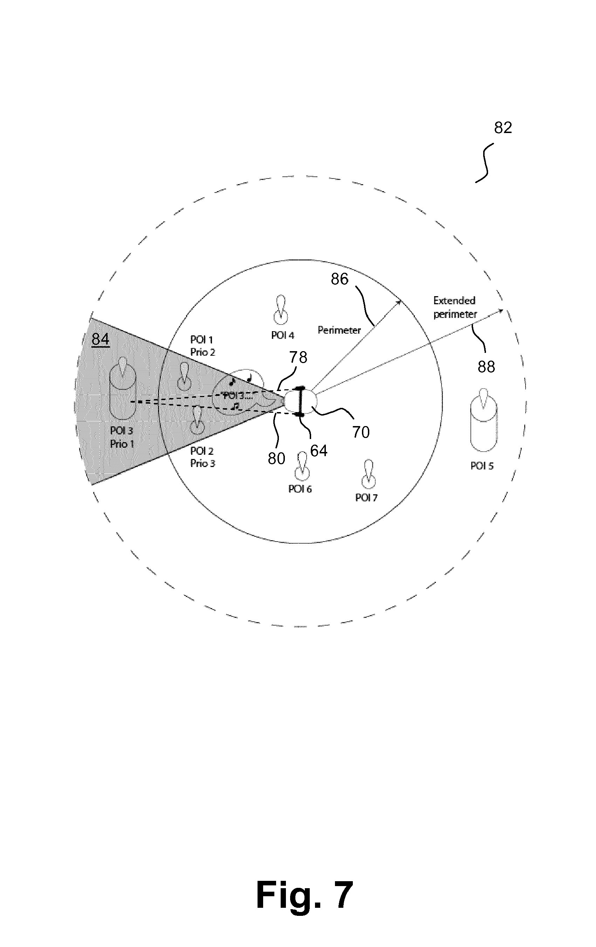

Fig. 7 schematically illustrates the operation of the navigation system in a situation where the user 70 has arrived at a town square 82 with various POIs. As indicated, the user 70 has requested the navigation system to provide information on a POI in the field of view 84 (hatched area) of the user 70, and possibly, the user has specified the types of POIs to be considered, e.g. historical sites. In response to the user request, the navigation system has identified the historical POI 1 and POI 2 to reside within the field of view 84 and inside the first distance threshold 86. The system has further determined POI 1 to be closest to the current centre of the field of view and since the user has a head pitch above 15° and since there is no obstruction of the user's view of POI 1, see below, the system emits sound with spoken information on POI 1 to the ears of the user.

Provision of the first distance threshold 86 prevents POIs outside the range of vision of the user from being selected.

The first distance threshold 86 may be user selectable.

The first distance threshold 86 may be dependent on the geographical position of the user. For example, in a street in a city, the first distance threshold 86 may be small corresponding to the width of the street, in a city square, the first distance threshold 86 may be larger corresponding to the largest width of the square, and in an open range, the first distance threshold 86 may correspond to the range of vision.

Preferably, POIs higher than a predetermined height threshold and with a distance to the user that is larger than a predetermined second distance threshold 88 that is larger than the first distance threshold 86 cannot be selected. In this way, the larger range of vision of tall POIs is taken into account, and the user can control the navigation system to select a high POI, e.g. a tower, a high rise building, etc, located behind another POI by looking up at the higher POI. Still, tall POIs located outside the larger range of vision of the user can not be selected.

Thus, if the user looks upward to have a look at the top of POI 3, e.g. a tower or a high building behind lower objects in the field of view, the processor is configured for selection of POI 3 although it is further away than the first distance threshold 86, provided that the determined head pitch is larger than a predetermined pitch threshold, e.g. 15°, and provided that the distance between the user and the selected POI matches the distance determined by the distance measurement unit 64 taking head pitch into account..

The pitch threshold may be user selectable. The pitch threshold may also depend on the geographical position, e.g. pitch determination may be disabled in areas without tall POIs.

If no POI is present within the current field of view of the user and within the respective first or second distance thresholds, the processor may be configured for controlling the sound generator to output a spoken message, e.g. "no POI within field of view".

The navigation system may provide the option that the user can select more than one POI within the user's field of view to be presented to the user by the system, and the user may specify the maximum number of POIs to be presented. If this option is selected in Fig. 6, the processor controls the sound generator to output spoken information on POI 1, POI 2, and POI 3 sequentially, e.g. in the order of proximity to the user.

Information on the relative positions of POI 1, POI 2, and POI 3 with relation to each other may be added by the processor, such as referring to the central POI, the POI immediately to the left of the central POI, etc.

Alternatively, or additionally, the processor may be configured for determining directions towards each of POI 1, POI 2, and POI 3 with relation to the determined geographical position and head yaw of the user, selecting pairs of filters with HRTFs corresponding to the determined directions, and controlling the sound generator for sequentially outputting audio signals with spoken information on each of POI 1, POI 2, and POI 3 in sequence through the respective selected pairs of filters so that the user hears spoken information on each of POI 1, POI 2, and POI 3 from the respective directions towards the respective POIs, provided that the user's view of the respective POI is not obstructed. If obstructed, no information, or information that the respective POI can not be viewed is provided by the system as explained above.

In this way, the user is provided with spatial knowledge about the surroundings and the need to visually consult a display of the surroundings is minimized making it easy and convenient for the user to navigate to geographical locations, the user desires to see or visit.

During or after the narrated presentation, the user may request the navigation system to guide the user to a selected geographical position, such as a new site with one or more POIs. The processor will then determine a direction towards a selected geographical destination and guide the user towards that geographical destination as previously described.

The smart phone 200 may contain a database of POIs as is way well-known in conventional smart phones.

## Claims

1. A hearing device configured to be head worn for emission of sound towards at least one of the ears of a user and accommodating
an inertial measurement unit configured for determining head yaw, when the user wears the hearing device in its intended operational position on the user's head, and
a distance measurement unit configured to measure distance from the user to an object in the field of view of the user.

2. A hearing device according to claim 1, wherein the distance measurement unit is of a type selected from the group consisting of: optical triangulation units, light stripe units, photogrammetric units, laser time-of-flight units, ultrasonic time-of-flight units, laser tracker units, and optical range finders.

3. A hearing device according to claim 1 or 2, wherein the inertial measurement unit comprises a first gyroscope for determining head yaw.

4. A hearing device according to claim 3, wherein the inertial measurement unit comprises a second gyroscope for determining head pitch, when the user wears the hearing device in its intended operational position on the user's head.

5. A navigation system comprising
a hearing device according to any of the preceding claims,
a GPS unit for determining the geographical position of the system,
a sound generator connected for outputting audio signals, and
a processor configured for,
based on the determined head yaw, selecting a POI in the field of view of the user,
receiving a distance measurement from the distance measurement unit, determining the distance from the user to the selected POI based on geographical positions of the user and the selected POI, and
controlling the sound generator to output audio signals with spoken information on the selected POI, when the absolute value of the difference between the received distance measurement and the determined geographical distance from the user to the selected POI is less than a predetermined obstruction threshold.

6. A navigation system according to claim 5, wherein the processor is configured for controlling the sound generator not to output audio signals with spoken information on the selected POI, when the absolute value of the difference between the received distance measurement and the determined geographical distance from the user to the selected POI is larger than a predetermined obstruction threshold.

7. A navigation system according to claim 5 or 6, wherein the processor is configured for controlling the sound generator to output audio signals with spoken information that the POI is hidden behind another object in the field of view of the user, when the absolute value of the difference between the received distance measurement and the determined geographical distance from the user to the selected POI is larger than a predetermined obstruction threshold.

8. A navigation system according to any of claims 5 - 7, wherein the inertial measurement system is also positioned for determining head pitch, when the user wears the hearing device in its intended operational position on the user's head, and wherein the processor is configured for, in the event that a first POI is positioned closest to the centre of the field of view of the user in front of a second POI with a height larger than the height of the first POI, selects the second POI, when the determined head pitch is larger than a predetermined pitch threshold.

9. A navigation system according to any of any of claims 5 - 8, wherein the processor is configured for taking head pitch into account when determining the absolute value of the difference between the received distance measurement and the determined distance from the user to the selected POI.

10. A navigation system according to any of any of claims 5 - 9, comprising
a hand-held device interconnected with the hearing device, and wherein
the hand-held device accommodates the GPS-unit.

11. A navigation system according to claim 10, wherein
the hand-held device comprises a display, and a processor configured to
display a map on the display with an indication of the determined geographical position and head yaw of the user,
an icon of the selected POI at the respective geographical positions of the selected POI,
an icon of the object in the field of view of the user, and
the distance to the object as determined by the distance measurement unit.

12. A method of navigation comprising the steps of
determining the geographical position of a user with a GPS unit,
determining head yaw of the user with a head worn inertial measurement unit,
selecting a POI in the field of view of the user,
determining a distance from the user to the selected POI based on the geographical position of the user and the selected POI, and
determining a distance from the user to an object in the field of view of the user.

13. A method according to claim 12, further comprising the step of
outputting sound with spoken information on the selected POI, when the absolute value of the difference between the determined distance from the user to the object in the field of view of the user and the determined geographical distance from the user to the selected POI, is less than a predetermined obstruction threshold.

14. A method according to claim 12 or 13, wherein the step of outputting sound comprises outputting sound with spoken information that the POI is hidden behind another object in the field of view of the user, when the absolute value of the difference between the received distance measurement and the determined geographical distance from the user to the selected POI is larger than a predetermined obstruction threshold.

15. A method according to any of claims 12 - 14, wherein the step of determining a distance to an object in the field of view of the user is performed in response to a user input.

16. A method according to any of claims 12 - 15, further comprising the step of determining head pitch of the user with the head worn inertial measurement unit.

17. A method according to any of claims 12 - 16, wherein the step of determining the absolute value of the difference between the determined distance from the user to the object in the field of view of the user and the determined geographical distance from the user to the selected POI incorporates head pitch.

18. A method according to any of claims 12 - 17, wherein the step of determining a distance from the user to an object in the field of view of the user is performed continuously.

19. A method according to any of claim 12 - 18, further comprising the step of recording connected values of distance from the user to an object in the field of view of the user, head yaw, head pitch, and geographical position.

20. A method according to claim 19, further comprising the step of uploading the connected values to a server.

21. A method according to claim 19 or 20, further comprising the step of forming a map with the objects based on the recorded connected values.
